# EUROPÄISCHE PATENTANMELDUNG

(11) **EP 0 685 669 A2**
(43) Veröffentlichungstag der Anmeldung: **06.12.1995**
(21) Anmeldenummer: 95106378.3
(22) Anmeldetag: 27.04.1995
(51) Int. Cl.: F16K 5/06, F16K 17/04

(54) **Kugelhahn mit integrierter automatischer Druckentlastung und Kugelhahnkombination**

(30) Priorität: 02.05.1994 DE 9407286 U
(71) Anmelder: CHEMAT GmbH Armaturen für Industrie- und Nuklearanlagen, D-77871 Renchen (DE)
(72) Erfinder: Braig, Hans, F-67720 Hoerdt (FR)
(74) Vertreter: Betten & Resch

(57) **Zusammenfassung**

Bei einem Kugelhahn mit integrierter automatischer Druckentlastung ist der Kugelsitzring (38) um einen solchen Betrag in Richtung weg vom gegenüberliegenden Kugelsitzring (36) federnd gelagert, daß die Schaltkugel (34) vom ersten Kugelsitzring (36) abhebbar ist, wodurch das Medium über die Durchgangsöffnung (48) der Schaltkugel (34) und eine Entlüftungsöffnung (60) in der Schaltkugel entweichen kann.

## Beschreibung

Die Erfindung betrifft einen Kugelhahn mit integrierter automatischer Druckentlastung, wobei die Kugel des Kugelhahns mittels zweier in einem Armaturengehäuse angeordneter, dichtender, den Kugelsitz bildender Kugelsitzringe gelagert ist, deren Ebene jeweils parallel zur Drehachse der Kugel und senkrecht zur allgemeinen Durchtrittsrichtung durch den Kugelhahn angeordnet ist.

Die Erfindung betrifft weiterhin eine Kugelhahnkombination mit integrierter automatischer Druckentlastung, mit einem ersten und einem zweiten Kugelhahn, wobei erster und zweiter Kugelhahn hintereinander in Reihe geschaltet sind und zwischen sich ein Rohrvolumen definieren, und mit einer Einrichtung zum Abführen von im Rohrvolumen sich aufbauendem Überdruck, wobei die Kugel des zweiten Kugelhahns mittels zweier im Armaturengehäuse angeordneter, dichtender, den Kugelsitz bildender Ringe gelagert ist, deren Ebene jeweils parallel zur Drehachse der Kugel und senkrecht zur allgemeinen Durchtrittsrichtung durch den Kugelhahn angeordnet ist und wobei ein erster der beiden Kugelsitzringe auf der dem ersten Kugelhahn zugewandten Seite und der zweite Kugelsitzring auf der dem ersten Kugelhahn abgewandten Seite der Kugel angeordnet ist.

Die Erfindung betrifft insbesondere eine solche Kugelhahnkombination, die zum Befüllen bzw. Entleeren von Großtankanlagen eingesetzt wird. In den meisten Fällen sind derartige Tankanlagen unter freiem Himmel installiert. Es kann sich hierbei um Treibstofftankanlagen, Gastankanlagen oder Tankanlagen zur Lagerung von chemischen Flüssigkeiten handeln.

Je nach der Gefahrenstufe des Mediums verlangt die Aufsichtsbehörde, daß die Einfüll- und die Auslaufarmaturen in doppelter Ausführung bestückt sind. In einem solchen Fall sind daher zwei Absperrarmaturen hintereinander in Reihe geschaltet.

Zwischen den beiden Absperrarmaturen befindet sich ein Rohrvolumen, welches mit dem in den Tankanlagen befindlichen Medium gefüllt sein kann. Hierbei besteht die Problematik, daß bei nächtlicher Abkühlung und anschließender Erwärmung tagsüber durch Sonneneinstrahlung im Volumen zwischen den beiden Absperrhähnen ein gewaltiger Überdruck entstehen kann, welcher sogar zur Überlastung der Verbindungsteile der Kugelhähne führen kann und somit eine Gefahrensituation heraufbeschwören kann.

Die Gefahrensituation kann man dadurch vermeiden, daß man für einen Abbau des Überdrucks sorgt, indem man zwischen die beiden Kugelhähne ein zusätzliches Rohrteil einflanscht, in welchem ein zusätzliches Überdruckventil eingebaut ist. Diese Lösung ist jedoch vergleichsweise aufwendig.

Der Erfindung liegt daher die Aufgabe zugrunde, eine andere Lösung zu finden, welche die geschilderte Gefahrensituation ebenfalls zuverlässig ausschließt, jedoch kostengünstiger und raumsparender ist.

Der Erfindung liegt weiterhin die Aufgabe zugrunde, einen Kugelhahn mit integrierter automatischer Druckentlastung zu schaffen.

Zur Lösung dieser Aufgabe ist im wesentlichen vorgesehen, daß der zweite Kugelsitzring des (zweiten) Kugelhahns um einen solchen Betrag in Richtung weg vom ersten Kugelsitzring federnd gelagert ist, daß die Kugel vom ersten Kugelsitzring abhebbar ist.

Die erfindungsgemäße Kugelhahnkombination wird derart am Tankbehälter montiert, daß sich der erste Kugelhahn zwischen Behälter und zweitem Kugelhahn befindet. Ein zwischen den beiden Kugelhähnen entstehender Überdruck belastet die beiden Kugel der beiden Kugelhähne in Richtung der Rohrachse. Erreicht nun der Überdruck einen vorbestimmten Wert, der wesentlich unterhalb der Belastbarkeitsgrenze der Kugelhähne liegt, so gibt der zweite Kugelsitzring dem Druck der Kugel federnd nach, so daß sich die Kugel von dem an seiner gegenüberliegenden Seite angeordneten ersten Kugelsitzring abhebt. Der im Rohrvolumen befindliche Überdruck kann somit über den zwischen Kugel und Gehäuse vorhandenen Totraum, die Durchgangsbohrung der Kugel und eine in der Kugel vorzugsweise zusätzlich vorgesehene Entlüftungsbohrung entweichen. Sobald im Rohrvolumen der Überdruck wieder im wesentlichen abgebaut ist, drückt der federnd gelagerte zweite Kugelsitzring die Kugel in ihre Ausgangsposition zurück, in der sie auch am ersten Kugelsitzring dichtend anliegt. Dieser Vorgang kann sich ersichtlich beliebig oft wiederholen.

Bei der erfindungsgemäßen Kugelhahnkombination erfüllt der erfindungsgemäß ausgebildete zweite Kugelhahn somit zwei Aufgaben, nämlich zum einen, für eine Sicherheitsabsperrung der Tankanlage entsprechend den behördlichen Vorschritten zu sorgen, und zum anderen, für eine Entlastung des Überdrucks in dem zwischen den beiden Kugelhähnen vorgesehenen Rohrvolumen zu sorgen. Durch die Erfindung wird erreicht, daß bei Tankanlagen die Doppelfunktion der Kugelhahnkombination den sicheren Betrieb gewähleistet, eine kompakte Einheit vorliegt und durch den Wegfall von Überdruck-Überwachungssystemen Kosten gespart werden.

Die Erfindung ist unabhängig davon anwendbar, ob die Kugelhähne von Hand geschaltet oder automatisch geschaltet werden.

In bevorzugter Ausbildung der Erfindung ist zur federnden Lagerung des zweiten Kugelsitzrings vorgesehen, daß dieser in einer ringförmigen Nut im Armaturengehäuse in axialer Richtung verschieblich gelagert ist, wobei zwischen dem zweiten Kugelsitzring und dem Boden der Nut eine den zweiten Kugelsitzring in Richtung zur Kugel hin vorspannende Federeinrichtung angeordnet ist, die insbesondere von Spiralfedern oder Tellerfedern gebildet sein kann. Die Federkraft der Feder ist je nach Erfordernissen so zu dimensionieren, daß ein vorher festgelegter, vorgegebener Überdruck im Rohrvolumen zwischen den beiden Kugelhähnen nicht überschritten wird.

Weitere vorteilhafte Merkmale ergeben sich aus den übrigen Unteransprüchen sowie aus der nachfolgenden Beschreibung, in der bevorzugte Ausführungsbeispiele der Erfindung anhand der Zeichnungen näher beschrieben werden.
Fig. 1 der Zeichnung zeigt einen axialen Schnitt durch die erfindungsgemäße Kugelhahnkombination,
Fig. 2 zeigt einen axialen Schnitt durch den erfindungsgemäßen Kugelhahn.

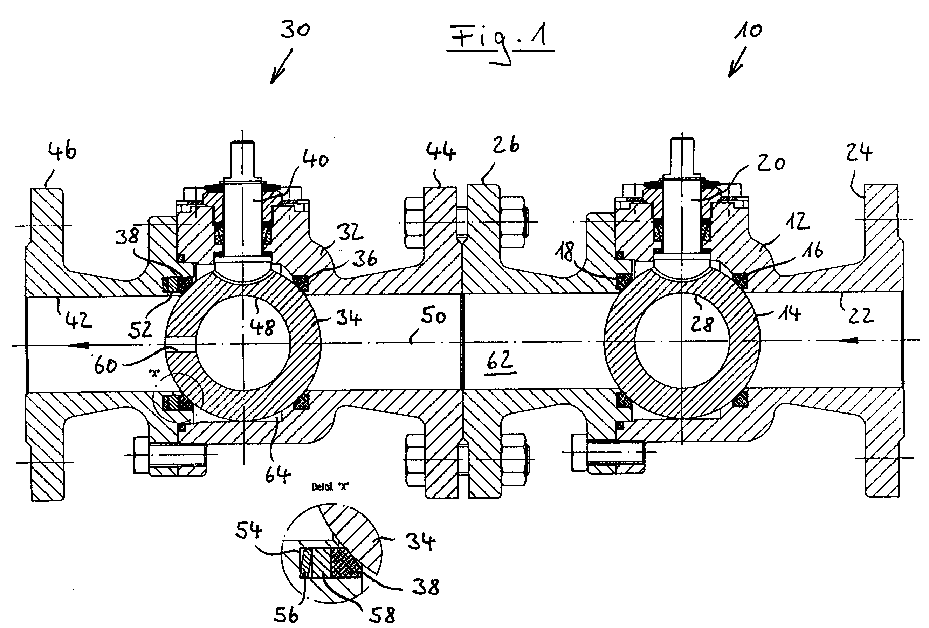

Die Kugelhahnkombination gemäß Fig. 1 umfaßt zwei Kugelhähne 10, 30 von im wesentlichen an sich bekannter Bauart. Der erster Kugelhahn 10 ist mit seinem in der Fig. 1 rechts dargestellten Flansch 24 direkt an einem (nicht dargestellten) Tank o. dgl. anflanschbar. Der Kugelhahn 10 umfaßt in üblicher Weise das Armaturengehäuse 12 mit darin gelagerter Schaltkugel 14 mit Durchgangsöffnung 28, die über zwei Kugelsitzringe 16, 18 am Gehäuse 12 gelagert und über eine Schaltwelle 20 manuell oder motorisch betätigbar ist. Das Gehäuse 12 weist eine im wesentlichen zylindrische Durchgangsöffnung 22 auf und über den linken Flansch 26 ist der erste Kugelhahn 10 mit dem Flansch 44 des Armaturengehäuses 32 des zweiten Kugelhahns 30 verbunden.

Der zweite Kugelhahn 30 ist, mit den noch zu beschreibenden Ausnahmen, gleich ausgebildet wie der erste Kugelhahn 10 und weist somit die beiden Endflansche 44, 46 des Gehäuses 32 auf, die Durchgangsöffnung 42 durch das Gehäuse, die mit der Durchgangsöffnung 22 des Kugelhahns 10 koaxial ist, die im Gehäuse 32 über Kugelsitzringe 36 und 38 gelagerte Schaltkugel 34 mit Durchgangsöffnung 48 sowie die Schaltwelle 40 zum Betätigen der Schaltkugel 34.

Der Kugelsitzring 38 des zweiten Kugelhahns 30, der auf derjenigen Seite der Schaltkugel 34 angeordnet ist, die dem ersten Kugelhahn 10 abgewandt ist, ist in Richtung der Achse 50 federnd gelagert. Zu diesem Zweck ist im Armaturengehäuse 32 eine ringförmige, zur Achse 50 koaxiale Nut 52 ausgebildet, in der der Kugelsitzring 38 in axialer Richtung verschieblich bewegbar ist. Zwischen dem Nutboden 54 und dem Kugelsitzring 38 ist eine Federeinrichtung angeordnet, im Falle des gezeigten Ausführungsbeispiels eine Tellerfeder 56, welche den Kugelsitzring 38, unter Zwischenschaltung eines in der Nut angeordneten ringförmigen Dichtungselements 58, gegen die Schaltkugel 34 drückt.

Angefederte Kugelsitzringe sind im Zusammenhang mit Kugelhähnen an sich bekannt und sie werden beispielsweise von der Anmelderin unter der Bezeichnung "Swing-Case" angeboten; solche angefederten, dichtenden Kugelsitzringe dienen beim Stand der Technik dazu, einen durch abrasive Medien auftretenden Abrieb im Bereich der Kugelsitze auszugleichen.

Hinsichtlich weiterer Details der Ausgestaltung der federnden Lagerung des Kugelsitzrings 38 kann somit auf den bekannten Stand der Technik Bezug genommen werden. Anstelle der Tellerfeder 56 sind selbstverständlich auch eine Vielzahl von axial wirkenden und umfangsmäßig verteilten Spiralfedern einsetzbar. Die zu wählende Federkraft richtet sich nach dem eingesetzten Medium und der jeweiligen Kugelhahnkonstruktion.

In der Kugel 34 des Kugelhahns 30 ist zusätzlich eine Entlüftungsbohrung 60 ausgebildet, die von der Durchgangsöffnung 48 abzweigt und sich im wesentlichen senkrecht hierzu erstreckt derart, daß bei geschlossenem Kugelhahn, also in der Darstellung gemäß Figur, die Entlüftungsbohrung 60 weg vom ersten Kugelhahn 10 weist.

Baut sich nun im rohrförmigen Volumen 62, welches durch die beiden Durchgangsöffnungen 22 und 42 der Armaturengehäuse 12 und 32 sowie durch die in Schließstellung befindlichen Schaltkugeln 14 und 34 definiert ist, ein Überdruck auf, so wird die Schaltkugel 34 ab einer bestimmten Größe des Überdrucks entgegen der Kraft der Feder 56 nach links, also weg von der Kugel 14 gedrückt, bis sich die Schaltkugel 34 vom Kugelsitzring 36 abhebt. Sobald die Schaltkugel 34 abhebt, strömt Medium vom rohrförmigen Volumen 62 zwischen Kugelsitzring 36 und Schaltkugel 34 hindurch in den zwischen Schaltkugel 34 und Armaturengehäuse 32 befindlichen Totraum 64, von hier in die Durchgangsöffnung 48 der Schaltkugel 34 und schließlich über die Entlüftungsbohrung 60 in das anschließende Rohrleitungssystem, wodurch das rohrförmige Volumen 62 druckentlastet wird. Nach erfolgter Druckentlastung überwiegt wiederum die Kraft der Federeinrichtung 56 und der Kugelsitzring 38 drückt die Schaltkugel 34 wieder zuverlässig dichtend gegen den Kugelsitzring 36.

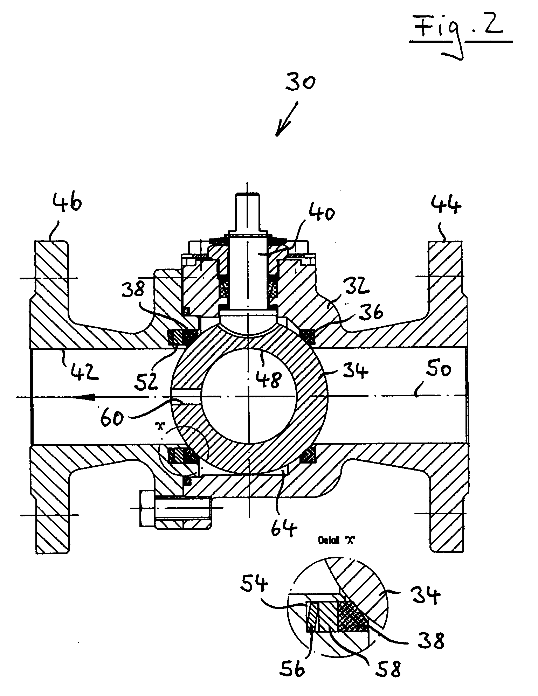

Der Kugelhahn gemäß Fig. 2 entspricht dem Kugelhahn 30 gemäß Fig. 1, so daß auf die diesbezügliche Beschreibung Bezug genommen werden kann. Ein solcher Kugelhahn kann bei einer Druckdifferenz von z.B. 12 bar, allgemein bei einer definierten Druckdifferenz von 6 - 25 bar entlasten.

### Bezugszeichenliste

- 10: erster Kugelhahn
- 12: Armaturengehäuse
- 14: Schaltkugel
- 16: Kugelsitzring
- 18: Kugelsitzring
- 20: Schaltwelle
- 22: Durchgangsöffnung
- 24: Flansch
- 26: Flansch
- 28: Durchgangsöffnung
- 30: zweiter Kugelhahn
- 32: Armaturengehäuse
- 34: Schaltkugel
- 36: Kugelsitzring
- 38: Kugelsitzring
- 40: Schaltwelle
- 42: Durchgangsöffnung
- 44: Flansch
- 46: Flansch
- 48: Durchgangsöffnung
- 50: Achse
- 52: Nut
- 54: Nutboden
- 56: Tellerfeder
- 58: Dichtungselement
- 60: Entlüftungsbohrung
- 62: rohförmiges Volumen
- 64: Totraum

## Patentansprüche

1. Kugelhahnkombination mit integrierter automatischer Druckentlastung, mit einem ersten und einem zweiten Kugelhahn, wobei erster und zweiter Kugelhahn hintereinander in Reihe geschaltet sind und zwischen sich ein Rohrvolumen definieren, und mit einer Einrichtung zum Abführen von im Rohrvolumen sich aufbauendem Überdruck, wobei die Kugel des zweiten Kugelhahns mittels zweier im Armaturengehäuse angeordneter, dichtender, den Kugelsitz bildender Ringe gelagert ist, deren Ebene jeweils parallel zur Drehachse der Kugel und senkrecht zur allgemeinen Durchtrittsrichtung durch den Kugelhahn angeordnet ist und wobei ein erster der beiden Kugelsitzringe auf der dem ersten Kugelhahn zugewandten Seite und der zweite Kugelsitzring auf der dem ersten Kugelhahn abgewandten Seite der Kugel angeordnet ist, dadurch gekennzeichnet, daß der zweite Kugelsitzring (38) des zweiten Kugelhahns (30) um einen solchen Betrag in Richtung weg vom ersten Kugelsitzring (36) federnd gelagert ist, daß die Kugel (34) vom ersten Kugelsitzring (36) abhebbar ist

2. Kugelhahnkombination nach Anspruch 1, dadurch gekennzeichnet, daß die Kugel (34) des zweiten Kugelhahns (30) eine Entlüftungsöffnung (60) aufweist, die bei geschlossenem Kugelhahn (30) mit der dem ersten Kugelhahn (10) abgewandeten Durchgangsöffnung (42) des Armaturengehäuses (32) kommuniziert.

3. Kugelhahnkombination nach Anspruch 2, dadurch gekennzeichnet, daß die Entlüftungsöffnung (60) senkrecht zur Durchgangsöffnung (48) der Kugel (34) ausgebildet ist.

4. Kugelnahnkombination nach einem der vorhergehenden Ansprüche, dadurch gekennzeichnet, daß der zweite Kugelsitzring (38) in einer ringförmigen Nut (52) im Armaturengehäuse (32) in axialer Richtung verschieblich gelagert ist.

5. Kugelhahnkombination nach Anspruch 4, dadurch gekennzeichnet, daß zwischen dem zweiten Kugelsitzring (38) und dem Boden (54) der Nut (52) eine den zweiten Kugelsitzring (38) in Richtung zur Kugel (34) hin vorspannende Federeinrichtung (56) angeordnet ist.

6. Kugelhahnkombination nach Anspruch 5, dadurch gekennzeichnet, daß die Federeinrichtung (56) von Spiralfedern oder einer oder mehreren Tellerfedern gebildet ist.

7. Kugelhahnkombination nach Anspruch 5 oder 6, dadurch gekennzeichnet, daß zwischen der Federeinrichtung (56) und dem Kugelsitzring (38) ein ringförmiges Dichtungselement (58) angeordnet ist.

8. Kugelhahn mit integrierter automatischer Druckentlastung, wobei die Kugel des Kugelhahns mittels zweier in einem Armaturengehäuse angeordneter, dichtender, den Kugelsitz bildender Kugelsitzringe gelagert ist, deren Ebene jeweils parallel zur Drehachse der Kugel und senkrecht zur allgemeinen Durchtrittsrichtung durch den Kugelhahn angeordnet ist, dadurch gekennzeichnet, daß ein zweiter Kugelsitzring (38) des Kugelhahns (30) um einen solchen Betrag in Richtung weg von einem ersten Kugelsitzring (36) federnd gelagert ist, daß die Kugel (34) vom ersten Kugelsitzring (36) abhebbar ist.

9. Kugelhahn nach Anspruch 8, dadurch gekennzeichnet, daß die Kugel (34) eine Entlüftungsöffnung (60) aufweist, die bei geschlossenem Kugelhahn (30) mit der in allgemeiner Durchtrittsrichtung gesehen stromabwärts gelegenen Durchgangsöffnung (42) des Armaturengehäuses (32) kommuniziert.

10. Kugelhahn nach Anspruch 8 oder 9, gekennzeichnet durch die kennzeichnenden Merkmale eines oder mehrerer der Ansprüche 3 bis 7.
